# EUROPEAN PATENT APPLICATION

(11) **EP 4 307 776 A1**
(43) Date of publication of application: **17.01.2024**
(21) Application number: 21941257.4
(22) Date of filing: 11.05.2021
(51) Int. Cl.: H04W 52/36, H04W 52/00

(54) **COMMUNICATION METHOD AND APPARATUS**

(71) Applicant: GUANGDONG OPPO MOBILE TELECOMMUNICATIONS CORP., LTD., Dongguan, Guangdong 523860 (CN)
(72) Inventor: LIN, Xue, Dongguan, Guangdong 523860 (CN); WANG, Shukun, Dongguan, Guangdong 523860 (CN); YOU, Xin, Dongguan, Guangdong 523860 (CN)
(74) Representative: Ipside
(86) International application number: PCT/CN2021/093068
(87) International publication number: WO 2022/236681

(57) **Abstract**

A communication method and apparatus are provided. The method includes the following. A terminal device triggers a power headroom reporting (PHR) during small data transmission (SDT). The terminal device determines, according to an amount of data to be transmitted and a first uplink (UL) resource, whether first UL data contains the PHR, where the first UL resource is used for transmitting the first UL data. With the method, the terminal device can determine, based on an UL resource and the data to be transmitted, whether the UL data contains a PHR, thereby avoiding more times of UL scheduling required to complete uploading of all the data to be transmitted due to occupancy of some of resources used for data transmission by a PHR media access control-control element (MAC CE).

## Description

### TECHNICAL FIELD

This disclosure relates to the field of communication technology, and more particularly to a communication method and apparatus.

### BACKGROUND

In long term evolution (LTE), early data transmission (EDT) has been introduced. During EDT, a terminal device may always remain in an idle state, a suspend state, or an inactive state to complete transmission of an uplink (UL) small data packet and/or transmission of a downlink (DL) small data packet.

During data transmission, a power headroom reporting (PHR) may be triggered. In PHR, a difference between an estimated UL transmission power and a maximum transmission power of the terminal device is reported to a network device, thereby facilitating power control and UL scheduling of the network device for the terminal device.

However, in EDT, if a pending PHR exists, since a PHR media access control-control element (MAC CE) has a higher logical-channel priority, transmission of the PHR MAC CE is prioritized over data transmission. During EDT, the terminal device is required to remain in the inactive state to complete data transmission, and therefore, the terminal device needs to complete transmission of a small amount of data within a time period. Since transmission of the PHR MAC CE needs to occupy some of resources used for data transmission, as a result, uploading of all data to be transmitted can be completed only through more times of UL scheduling.

### SUMMARY

Implementations of the disclosure provide a communication method and apparatus, so as to solve the problem in the related art that uploading all data to be transmitted can be completed only through more times of uplink (UL) scheduling due to occupancy of some of resources used for data transmission by a power headroom reporting (PHR) media access control-control element (MAC CE).

In a first aspect of the disclosure, a communication method is provided. The method includes the following. A terminal device triggers a PHR during small data transmission (SDT). The terminal device determines, according to an amount of data to be transmitted and a first UL resource, whether first UL data contains the PHR, where the first UL resource is used for transmitting the first UL data.

In an optional implementation, if a capacity of the first UL resource is greater than or equal to the amount of the data to be transmitted, the first UL data does not contain the PHR.

In an optional implementation, the method further includes the following. The terminal device cancels all pending PHRs.

In an optional implementation, if a capacity of the first UL resource is less than the amount of the data to be transmitted and the capacity of the first UL resource is greater than or equal to a sum of a MAC CE for the PHR (PHR MAC CE) and a subheader for the MAC CE, the first UL data contains the PHR.

In an optional implementation, the method further includes the following. The terminal device generates and transmits the PHR MAC CE.

In an optional implementation, the PHR MAC CE is a single entry MAC CE, or a multiple entry MAC CE, or a MAC CE introduced for SDT.

In an optional implementation, the first UL data further includes a MAC packet data unit (PDU) established based on SDT, and the MAC PDU contains the data to be transmitted.

In an optional implementation, SDT includes random access (RA)-SDT or configured grant (CG)-SDT.

In an optional implementation, a condition for triggering the PHR includes at least one of: a reporting prohibit timer expires and a pathloss changes by more than a threshold compared with the most recent PHR transmission; a reporting periodic timer expires; a PHR functionality is configured or reconfigured by an upper layer and does not indicate to disable a PHR function; or there is currently no pending PHR and a capacity of a current UL resource is less than the amount of the data to be transmitted.

In an optional implementation, the first UL resource includes at least one of: an UL grant scheduled via a random access response (RAR), a physical uplink shared channel (PUSCH) resource for transmitting a two-step random access payload, an UL resource configured by a network device through dynamic scheduling, or a semi-static resource pre-configured.

In an optional implementation, if the terminal device is configured with dual connectivity (DC) or carrier aggregation (CA), the terminal device is not restricted by or does not perform dynamic power sharing configuration when calculating the PHR.

In an optional implementation, the method further includes the following. The terminal device transmits the first UL data on the first UL resource.

In a second aspect of the disclosure, a communication method is provided. The method includes the following. A network device receives first UL data transmitted on a first UL resource during SDT, where whether the first UL data contains a PHR is determined according to the first UL resource and an amount of data to be transmitted by a terminal device.

In an optional implementation, if a capacity of the first UL resource is greater than or equal to the amount of the data to be transmitted, the first UL data does not contain the PHR.

In an optional implementation, if a capacity of the first UL resource is less than the amount of the data to be transmitted and the capacity of the first UL resource is greater than or equal to a sum of a MAC CE for the PHR (PHR MAC CE) and a subheader for the MAC CE, the first UL data contains the PHR.

In an optional implementation, the PHR MAC CE is a single entry MAC CE, or a multiple entry MAC CE, or a MAC CE introduced for SDT.

In an optional implementation, the first UL data further includes a MAC PDU established based on SDT, and the MAC PDU contains the data to be transmitted.

In an optional implementation, SDT includes RA-SDT or CG-SDT.

In an optional implementation, a condition for triggering the PHR includes at least one of: a reporting prohibit timer expires and a pathloss changes by more than a threshold compared with the most recent PHR transmission; a reporting periodic timer expires; a PHR functionality is configured or reconfigured by an upper layer and does not indicate to disable a PHR function; or there is currently no pending PHR and a capacity of a current UL resource is less than the amount of the data to be transmitted.

In an optional implementation, the first UL resource includes at least one of: an UL grant scheduled via an RAR, a PUSCH resource used for transmitting a two-step random access payload, an UL resource configured by the network device through dynamic scheduling, or a semi-static resource pre-configured.

In an optional implementation, if the terminal device is configured with DC or CA, the terminal device is not restricted by or does not perform dynamic power sharing configuration when calculating the PHR.

In a third aspect of the disclosure, a communication apparatus is provided. The apparatus includes a triggering module and a processing module. The triggering module is configured to trigger a PHR during SDT. The processing module is configured to determine, according to an amount of data to be transmitted and a first UL resource, whether first UL data contains the PHR, where the first UL resource is used for transmitting the first UL data.

In an optional implementation, if a capacity of the first UL resource is greater than or equal to the amount of the data to be transmitted, the first UL data does not contain the PHR.

In an optional implementation, the processing module is further configured for the apparatus to cancel all pending PHRs.

In an optional implementation, if a capacity of the first UL resource is less than the amount of the data to be transmitted and the capacity of the first UL resource is greater than or equal to a sum of a MAC CE for the PHR (PHR MAC CE) and a subheader for the MAC CE, the first UL data contains the PHR.

In an optional implementation, the processing module is further configured for the apparatus to generate and transmit the PHR MAC CE.

In an optional implementation, the PHR MAC CE is a single entry MAC CE, or a multiple entry MAC CE, or a MAC CE introduced for SDT.

In an optional implementation, the first UL data further includes a MAC PDU established based on SDT, and the MAC PDU contains the data to be transmitted.

In an optional implementation, SDT includes RA-SDT or CG-SDT.

In an optional implementation, a condition for triggering the PHR includes at least one of: a reporting prohibit timer expires and a pathloss changes by more than a threshold compared with the most recent PHR transmission; a reporting periodic timer expires; a PHR functionality is configured or reconfigured by an upper layer and does not indicate to disable a PHR function; or there is currently no pending PHR and a capacity of a current UL resource is less than the amount of the data to be transmitted.

In an optional implementation, the first UL resource includes at least one of: an UL grant scheduled via an RAR, a PUSCH resource used for transmitting a two-step random access payload, an UL resource configured by the network device through dynamic scheduling, or a semi-static resource pre-configured.

In an optional implementation, if the apparatus is configured with DC or CA, the apparatus is not restricted by or does not perform dynamic power sharing configuration when calculating the PHR.

In an optional implementation, the apparatus further includes a transmitting module. The transmitting module is configured to transmit the first UL data on the first UL resource.

In a fourth aspect of the disclosure, a communication apparatus is provided. The apparatus includes a receiving module and a processing module. The receiving module is configured to receive first UL data transmitted on a first UL resource during SDT, where whether the first UL data contains a PHR is determined according to the first UL resource and an amount of data to be transmitted by a terminal device. The processing module is configured to process the first UL data.

In an optional implementation, if a capacity of the first UL resource is greater than or equal to the amount of the data to be transmitted, the first UL data does not contain the PHR.

In an optional implementation, if a capacity of the first UL resource is less than the amount of the data to be transmitted and the capacity of the first UL resource is greater than or equal to a sum of a MAC CE for the PHR (PHR MAC CE) and a subheader for the MAC CE, the first UL data contains the PHR.

In an optional implementation, the PHR MAC CE is a single entry MAC CE, or a multiple entry MAC CE, or a MAC CE introduced for SDT.

In an optional implementation, the first UL data further includes a MAC PDU established based on SDT, and the MAC PDU contains the data to be transmitted.

In an optional implementation, SDT includes RA-SDT and CG-SDT.

In an optional implementation, a condition for triggering the PHR includes at least one of: a reporting prohibit timer expires and a pathloss changes by more than a threshold compared with the most recent PHR transmission; a reporting periodic timer expires; a PHR functionality is configured or reconfigured by an upper layer and does not indicate to disable a PHR function; or there is currently no pending PHR and a capacity of a current UL resource is less than the amount of the data to be transmitted.

In an optional implementation, the first UL resource includes at least one of: an UL grant scheduled via an RAR, a PUSCH resource used for transmitting a two-step random access payload, an UL resource configured by the apparatus through dynamic scheduling, or a semi-static resource pre-configured.

In an optional implementation, if the terminal device is configured with DC or CA, the terminal device is not restricted by or does not perform dynamic power sharing configuration when calculating the PHR.

In a fifth aspect of the disclosure, a terminal device is provided. The terminal device includes a processor, a memory, a receiver, and an interface for communicating with a network device. The memory is configured to store computer-executable instructions. The processor is configured to execute the computer-executable instructions stored in the memory, to implement the communication method described in the first aspect.

In a sixth aspect, the disclosure provides a network device. The network device includes a processor, a memory, a transmitter, and an interface for communicating with a terminal device. The memory is configured to store computer-executable instructions. The processor is configured to execute the computer-executable instructions stored in the memory, to implement the communication method described in the second aspect.

In a seventh aspect of the disclosure, a chip is provided. The chip includes a processor. The processor is configured to invoke and execute computer programs stored in a memory, to cause a device equipped with the chip to implement the method described in the first aspect.

In an eighth aspect of the disclosure, a chip is provided. The chip includes a processor. The processor is configured to invoke and execute computer programs stored in a memory, to cause a device equipped with the chip to implement the method described in the second aspect.

In a ninth aspect of the disclosure, a computer-readable storage medium is provided. The computer-readable storage medium is configured to store computer programs which are operable with a computer to implement the method described in the first aspect.

In a tenth aspect of the disclosure, a computer-readable storage medium is provided. The computer-readable storage medium is configured to store computer programs which are operable with a computer to implement the method described in the first aspect or in the second aspect.

In an eleventh aspect of the disclosure, a computer program product is provided. The computer program product includes computer instructions which, when executed by a processor, are operable to implement the method described in the first aspect.

In a twelfth aspect of the disclosure, a computer program product is provided. The computer program product includes computer instructions which, when executed by a processor, are operable to implement the method described in the second aspect.

In a thirteenth aspect of the disclosure, a computer program is provided. The computer program is operable with a computer to perform the method described in the first aspect.

In a fourteenth aspect of the disclosure, a computer program is provided. The computer program is operable with a computer to perform the method described in the second aspect.

According to the communication method and apparatus provided in implementations of the disclosure, the terminal device firstly triggers a PHR during SDT. Then, the terminal device determines, according to the amount of the data to be transmitted and the first UL resource, whether the first UL data contains the PHR, where the first UL resource is used for transmitting the first UL data. With of the method, the terminal device can determine, based on an UL resource and the data to be transmitted, whether the UL data contains a PHR, thereby avoiding more times of UL scheduling required to complete uploading of all the data to be transmitted due to occupancy of some of resources used for data transmission by a PHR MAC CE.

### BRIEF DESCRIPTION OF THE DRAWINGS

In order to describe more clearly technical solutions of the disclosure or the related art, the following will give a brief introduction to the accompanying drawings used for describing implementations or the related art. Apparently, the accompanying drawings described below are some implementations of the disclosure. Based on these drawings, those of ordinary skill in the art can also obtain other drawings without creative effort.
FIG. 1 is a schematic flowchart illustrating an existing preconfigured uplink resource (PUR) transmission.
FIG. 2 is a schematic diagram illustrating a scenario for a communication method provided in implementations of the disclosure.
FIG. 3 is a signaling interaction diagram of a communication method provided in implementations of the disclosure.
FIG. 4 is a schematic flowchart of a communication method provided in implementations of the disclosure.
FIG. 5 is a schematic structural diagram of a communication apparatus provided in implementations of the disclosure.
FIG. 6 is a schematic structural diagram of another communication apparatus provided in implementations of the disclosure.
FIG. 7 is a schematic structural diagram of an electronic device provided in implementations of the disclosure.

### DETAILED DESCRIPTION

To make objectives, technical solutions, and advantages of the disclosure clearer, the following will describe technical solutions of implementations of the disclosure clearly and completely with reference to the accompanying drawings of the implementations of the disclosure. Apparently, the implementations described herein are merely some implementations, rather than all implementations, of the disclosure. Based on the implementations of the disclosure, all other implementations obtained by those of ordinary skill in the art without creative effort shall fall within the protection scope of the disclosure.

The terms "first", "second", and the like in the specification of implementations, claims of the disclosure, and above accompanying drawings are used to distinguish similar objects, and are not necessarily used to describe a particular sequence or order. It should be understood that, the terms thus used may be interchangeable where appropriate, so that the implementations of the disclosure described herein, for example, can be implemented in a sequences other than those illustrated or described herein. In addition, the terms "include", "comprise", and "have" as well as variations thereof are intended to cover non-exclusive inclusion. For example, a process, method, system, product, or device including a series of steps or units is not limited to the listed steps or units, and instead, it can optionally include other steps or units that are not listed or other steps or units inherent to the process, method, product, or device.

It should be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein usually indicates that the associated objects are in an "or" relationship.

The following will describe the technical solutions of implementations of the disclosure with reference to the accompanying drawings of the implementations of the disclosure. Apparently, the implementations described herein are some implementations, rather than all implementations, of the disclosure. Based on the implementations of the disclosure, all other implementations obtained by those of ordinary skill in the art without creative effort shall fall within the protection scope of the disclosure.

Firstly, early data transmission (EDT) will be described.

In long term evolution (LTE), EDT has been introduced. During EDT, a terminal device may always remain in an idle state, a suspend state, or an inactive state to complete transmission of an uplink (UL) small data packet and/or transmission of a downlink (DL) small data packet. In terms of configuration, a network device configures, on a system information block type 2 (SIB2), a maximum transport block (TB) size allowed to be transmitted by a current network. A terminal device determines an amount of data to be transmitted of the terminal device. If the amount of the data to be transmitted is less than the maximum TB size broadcast by the network device, the terminal device can initiate EDT. If the amount of the data to be transmitted is greater than or equal to the maximum TB size broadcast by the network device, the terminal device (user equipment (UE)) will enter a connected state for data transmission through a conventional connection-establishment procedure. If a cell in which UL EDT is initiated by the terminal device is the same as the last serving cell, the network device can directly deliver UL data to a core-network device after receiving a connection resume request and the UL data transmitted by the terminal device.

Secondly, preconfigured uplink resource (PUR) will be described.

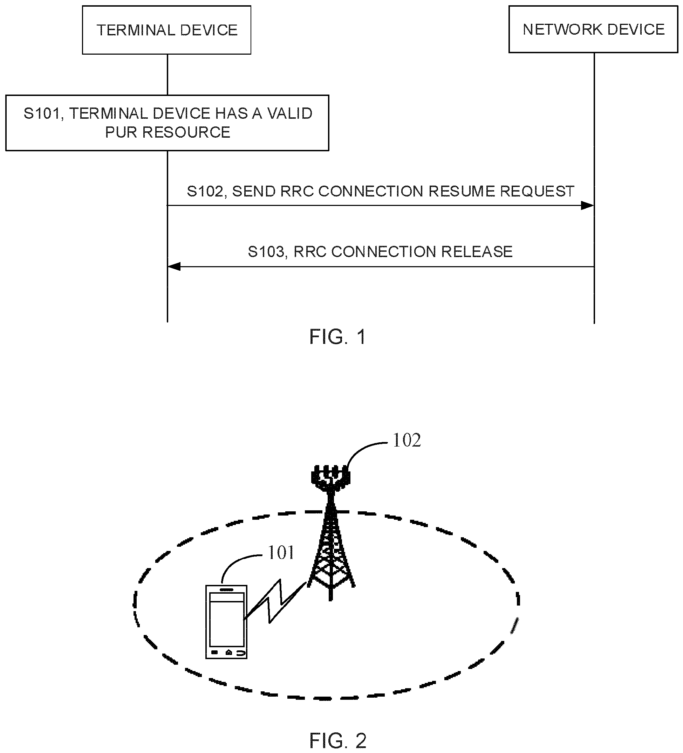

In LTE release 16 (R16), for a narrow-band Internet of things (NB-loT) scenario and an enhanced machine type communication (eMTC) scenario, a method for data transmission on a PUR resource in an idle state is introduced. FIG. 1 is a schematic flowchart illustrating an existing PUR transmission. As illustrated in FIG. 1, a PUR resource is valid only in a currently configured cell, that is, if a cell change is detected by the terminal device and random access is initiated in a new cell by the terminal device, the terminal device needs to release the PUR resource configured for the original cell. Compared with LTE UP-EDT, in PUR transmission, a procedure of transmitting a preamble to obtain a timing advance (TA) and an UL grant is omitted.

Power headroom reporting (PHR) will be elaborated again.

In PHR, a difference between an estimated UL transmission power and a maximum transmission power of the terminal device is reported to the network device, thereby facilitating power control and UL scheduling of the network device for the terminal device. PHR may be determined by subtracting a physical uplink shared channel (PUSCH) transmission power from the maximum transmission power of the terminal device, or determined by subtracting a PUSCH transmission power and a physical uplink control channel (PUCCH) transmission power from the maximum transmission power of the terminal device.

A condition for triggering PHR in the related art may include at least one of the following: a reporting prohibit timer (*phr-ProhibitTimer*) expires and a pathloss changes by more than a threshold (*phr-Tx-PowerFactorChange* decibels (dB)) compared with the most recent PHR transmission; a reporting periodic timer (*phr-PeriodicTimer*) expires; a PHR functionality is configured or reconfigured by an upper layer and does not indicate to disable a PHR function; a primary secondary cell (PSCell) is added or changed; or upon activation of a secondary cell (SCell) of any media access control (MAC) entity with configured UL of which a first active downlink bandwidth part (BWP) identity (ID) (*firstActiveDownlinkBWP-Id*) is not set to dormant BWP.

In an existing PHR procedure, if an UL resource is allocated to the terminal device by the network device for new data transmission, PHR is triggered, and the resource allocated is enough to carry a PHR MAC control element (CE), a MAC layer will obtain power headroom information from a physical layer, and assemble the PHR MAC CE into a MAC packet data unit (PDU) in order for PHR reporting. In a single-cell scenario, i. e., a scenario where neither dual connectivity (DC) nor UL carrier aggregation (UL CA) is configured, the terminal reports a PHR of a single cell. In a multi-radio access technology (RAT) DC (MR-DC) scenario, the terminal device reports a PHR of each activated cell for the terminal device, where the activated cell includes a cell at a master cell group (MCG) side and a cell at a secondary cell group (SCG) side.

Finally, small data transmission (SDT) in 5^{th} generation (5G) new radio (NR) will be described.

In a 5G NR system, a radio resource control (RRC) state includes an RRC idle state, an RRC inactive state, and an RRC connected state. The RRC inactive state is a new state introduced into a 5G system for the sake of power saving. For a terminal device in the RRC inactive state, a radio bearer and all radio resources are released, but an access context of the terminal device is reserved at a terminal-device side and a network-device side so as to facilitate quick resume of RRC connection. The network device usually keeps a terminal device that does not frequently perform data transmission to be in the RRC inactive state. Before Rel-16, the terminal device in the RRC inactive state does not support data transmission. When mobile original (MO) data or mobile terminated (MT) data arrives, the terminal device needs to resume a connection, and is released to the RRC inactive state after data transmission is completed. For a terminal device with a small data amount and a low transmission frequency, if the above transmission mechanism is adopted, it will cause unnecessary power consumption and signaling overhead. To this end, in release 17 (Rel-17), a project for research on SDT (the meaning of SDT is the same as that of EDT) in the RRC inactive state is approved, so as to realize random access (RA) (two-step/four-step) UL SDT and configured grant (CG) UL SDT.

However, in an existing PHR procedure, PHR is reported to the network in the form of MAC CE, and according to an existing order of logical-channel priority, a priority of a PHR MAC CE is higher than that of a dedicated traffic channel (DTCH). In SDT, if there is a pending PHR, since the PHR MAC CE has a higher logical-channel priority, transmission of the PHR MAC CE is prioritized over data transmission. During SDT, the terminal device is required to remain in the RRC inactive state to complete data transmission, and therefore, the terminal device needs to complete transmission of a small amount of data within a time period. Since transmission of the PHR MAC CE needs to occupy some of resources used for data transmission, as a result, it will require more times of UL scheduling to complete transmission of all the UL data.

In order to solve the above technical problem, implementations of the disclosure provide a communication method and apparatus. After triggering a PHR during SDT, a terminal device can determine, based on an UL resource and data to be transmitted, whether UL data contains the PHR, which is possible to avoid unnecessary PHR in some cases, thereby avoiding more times of UL scheduling required to complete uploading of all the data to be transmitted due to occupancy of some of resources used for data transmission by a PHR MAC CE.

It should be noted that, technical solutions of implementations of the disclosure may be applied to various communication systems, and implementations of the disclosure are not limited in this regard. For example, a global system of mobile communication (GSM), a code division multiple access (CDMA) system, a wideband code division multiple access (WCDMA) system, a general packet radio service (GPRS), a long term evolution (LTE) system, and an LTE frequency division duplex (FDD) system, an LTE time division duplex (TDD) system, an advanced LTE (LTE-A) system, an NR system, an evolved system of an NR system, an LTE-based access to unlicensed spectrum (LTE-U) system, an NR-based access to unlicensed spectrum (NR-U) system, a universal mobile telecommunication system (UMTS), a worldwide interoperability for microwave access (WiMAX) communication system, a wireless local area network (WLAN), a wireless fidelity (WiFi), a next-generation communication system, or other communication systems, etc.

The following will exemplify an application scenario of the disclosure.

FIG. 2 is a schematic diagram illustrating a scenario for a communication method provided in implementations of the disclosure. As illustrated in FIG. 2, a terminal device 101 triggers a PHR during SDT. After obtaining a first UL resource, the terminal device 101 can determine whether first UL data contains the PHR. Then, the terminal device 101 generates the first UL data and transmits the first UL data to a network device 102 on the first UL resource.

The mobile terminal 11 includes, but is not limited to, a satellite telephone or cellular telephone, a personal communication system (PCS) terminal integrated with functions of cellular radio telephone, data processing, fax, and data communication, a personal digital assistant (PDA) equipped with radio telephone, pager, Internet/Intranet access, web browser, notebook, calendar, and/or global positioning system (GPS) receiver, and a conventional laptop, a handheld receiver, or other electronic devices equipped with radio telephone receiver. The terminal device may refer to an access terminal, a UE, a subscriber unit, a subscriber station, a mobile station, a remote station, a remote terminal, a mobile device, a user terminal, a terminal, a wireless communication device, a user agent, or a user device. The access terminal may be a cellular radio telephone, a cordless telephone, a session initiation protocol (SIP) telephone, a wireless local loop (WLL) station, a PDA, or a device with wireless communication functions such as a handheld device, a computing device, other processing devices coupled with a wireless modem, an in-vehicle device, a wearable device, a terminal device in a 5G network, a terminal device in a future evolved public land mobile network (PLMN), etc.

The network device 12 can provide communication coverage for a particular geographic region and communicate with terminal devices within the coverage area. Optionally, the network device 102 may be a base transceiver station (BTS) in a GSM or a CDMA system, or may be a NodeB (NB) in a WCDMA system, or may be an evolutional Node B (eNB or eNodeB) in an LTE system, or a radio controller in a cloud radio access network (CRAN); or the network device may be a mobile switching center, a relay station, an access point, an in-vehicle device, a wearable device, a hub, a switch, a bridge, a router, a network-side device in a 5G network, or a network device in a future evolved public land mobile network (PLMN), etc.

The following will take a terminal device and a network device as examples to describe in detail the technical solutions of implementations of the disclosure with reference to specific implementations. The following implementations may be combined with each other, and the same or similar concept or procedure may not be elaborated again in some implementations.

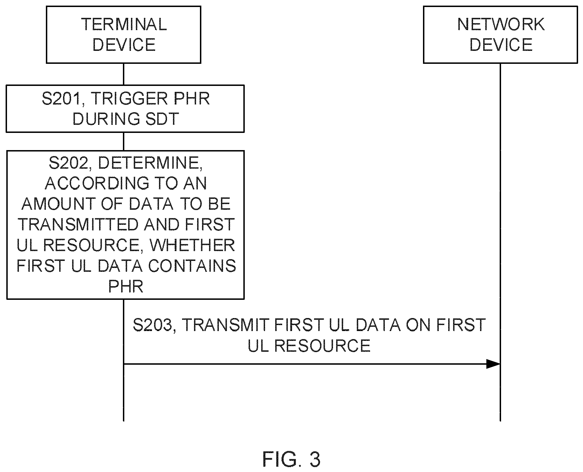

FIG. 3 is a signaling interaction diagram of a communication method provided in implementations of the disclosure. An execution entity in implementations of the disclosure is a terminal device and a network device, relating to a procedure regarding how the terminal device determines the content contained in first UL data. As illustrated in FIG. 3, the method includes the following.

S201, the terminal device triggers a PHR during SDT.

SDT means that the terminal device remains in an idle state, a suspend state, or an inactive state to complete transmission of an UL small data packet and/or transmission of a DL small data packet. In SDT, an amount of data transmitted by the terminal device is required to be less than a maximum TB size broadcast by the network device.

It should be understood that, there is no limitation on the type of SDT in implementations of the disclosure. Exemplarily, SDT may include RA-SDT or CG-SDT.

In the disclosure, during SDT, the terminal device may trigger the PHR on some condition(s). There is also no limitation on the condition for triggering the PHR in implementations of the disclosure. Exemplarily, the condition for triggering the PHR includes at least one of: a reporting prohibit timer expires and a pathloss changes by more than a threshold compared with the most recent PHR transmission; a reporting periodic timer expires; a PHR functionality is configured or reconfigured by an upper layer and does not indicate to disable a PHR function; or there is currently no pending PHR and a capacity of a current UL resource is less than an amount of data to be transmitted.

It should be noted that, in implementations of the disclosure, the PHR may be triggered on one of the above conditions, or may be triggered on more than one of the above conditions, and implementations of the disclosure are not limited in this regard.

In addition, there is no limitation on the reporting prohibit timer and the reporting periodic timer in implementations of the disclosure. Exemplarily, the reporting prohibit timer may be *phr-ProhibitTimer,* and the reporting periodic timer may be *phr-PeriodicTimer.* There is also no limitation on the threshold of pathloss change in implementations of the disclosure, and the threshold of pathloss change may be set according to actual needs. For example, the threshold of pathloss change may be *phr-Tx-PowerFactorChange* dB.

S202, the terminal device determines, according to an amount of data to be transmitted and a first UL resource, whether first UL data contains the PHR.

In this step, after triggering the PHR during SDT, the terminal device may firstly obtain the first UL resource, and then determine, according to the amount of the data to be transmitted and the first UL resource, whether the first UL data contains the PHR.

It should be understood that, in implementations of the disclosure, the first UL resource may include one type or may include multiple types, and implementations of the disclosure are not limited in this regard. Exemplarily, the first UL resource includes at least one of: an UL grant scheduled via a random access response (RAR), a PUSCH resource for transmitting a two-step random access (message A (MsgA)) payload, an UL resource configured by the network device through dynamic scheduling, or a semi-static resource pre-configured.

It should be understood that, the first UL resource is used for transmitting the first UL data, where the first UL data is data transmitted by the terminal device to the network device during SDT. Transmission of the first UL data may be the 1^{st} data transmission in the current SDT, or may be data transmission (i. e. subsequent transmission) after the 1^{st} transmission in the SDT, and implementations of the disclosure are not limited in this regard.

In the disclosure, after obtaining the first UL resource, the terminal device can determine whether the content contained in the first UL data includes the PHR.

It should be understood that, there is no limitation on how to determine whether the first UL data contains PHR in implementations of the disclosure. In some implementations, the terminal device may determine whether the first UL data contains PHR by determining whether it is necessary to perform PHR.

Exemplarily, if a capacity of the first UL resource is greater than or equal to the amount of the data to be transmitted, the terminal device does not need to perform PHR. In this case, the first UL resource can accommodate all the data to be transmitted, and the first UL data may not contain PHR. Accordingly, the terminal device can cancel all pending PHRs, establish a MAC PDU through an existing link control protocol (LCP) procedure, and then transmit the first UL data to the network device on the first UL resource.

Exemplarily, if the capacity of the first UL resource is less than the amount of the data to be transmitted, the first UL resource can only accommodate some of the data to be transmitted, and the terminal device needs to perform PHR. In this case, if the capacity of the first UL resource is greater than or equal to the sum of a MAC CE for the PHR (PHR MAC CE) and a subheader for the MAC CE, the first UL data contains the PHR. Accordingly, the terminal device generates the PHR MAC CE, and establishes a MAC PDU through an existing LCP procedure. Then, the terminal device transmits the PHR MAC CE and the MAC PDU as the first UL data to the network device.

It should be noted that, in implementations of the disclosure, PHR is carried in the PHR MAC CE. There is no limitation on the type of the PHR MAC CE in implementations of the disclosure. Exemplarily, the PHR MAC CE may be a single entry MAC CE, or a multiple entry MAC CE, or a MAC CE introduced for SDT.

It should be noted that, in implementations of the disclosure, establishment of the MAC PDU through an existing LCP procedure may be SDT-based, and the MAC PDU may contain the data to be transmitted.

Optionally, in some implementations, if the terminal device is configured with DC or CA, the terminal device is not restricted by or does not perform dynamic power sharing configuration when calculating PHR, and considers that all the maximum transmission power of the terminal device is used for data transmission in a master cell group (MCG) terminated at a master node (MN).

Exemplarily, if the maximum transmission power of the terminal device is A and dynamic power sharing configuration is adopted, power used for data transmission in a primary cell (PCell) is B, and the remaining power (i. e. *A* - *B*) is used for data transmission in other cells. However, in the disclosure, since a CA configuration or a DC configuration will not be recovered during SDT, PHR calculation during SDT may not be restricted by dynamic power sharing configuration or dynamic power sharing configuration may not be performed during PHR calculation, so that the terminal device can use a higher UL power to perform data transmission, thereby improving reliability of data transmission.

S203, the terminal device transmits the first UL data to the network device on the first UL resource.

It should be understood that, there is no limitation on how to transmit the first UL data on the first UL resource in implementations of the disclosure, and a conventional UL data transmission scheme may be used.

According to the communication method provided in implementations of the disclosure, the terminal device firstly triggers a PHR during SDT. Then, the terminal device determines, according to the amount of the data to be transmitted and the first UL resource, whether the first UL data contains the PHR, where the first UL resource is used for transmitting the first UL data. With the method, the terminal device can determine, based on an UL resource and the data to be transmitted, whether UL data contains a PHR, thereby avoiding more times of UL scheduling required to complete uploading of all the data to be transmitted due to occupancy of some of resources used for data transmission by a PHR MAC CE.

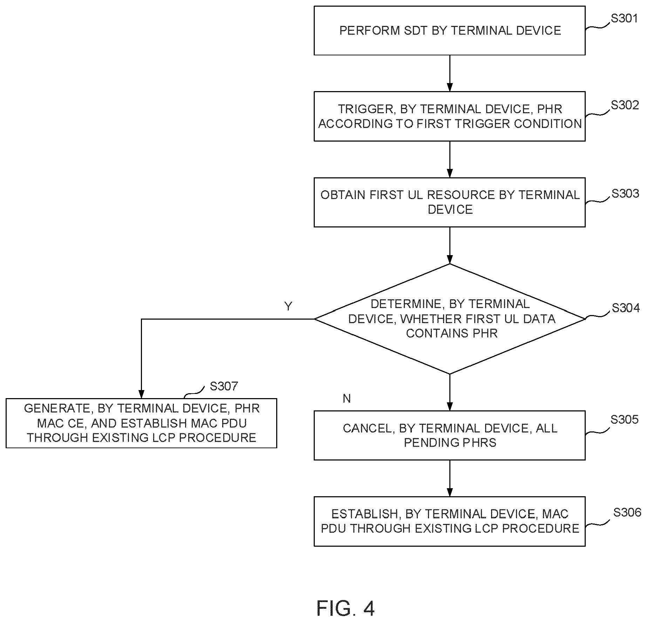

Based on the foregoing implementations, the following will elaborate a complete procedure of determining the first UL data by the terminal device. FIG. 4 is a schematic flowchart of a communication method provided in implementations of the disclosure. As illustrated in FIG. 4, an execution entity for the communication method is a terminal device. The method includes the following.

S301, the terminal device performs SDT.

SDT includes RA-SDT or CG-SDT.

S302, the terminal device triggers a PHR according to a first trigger condition.

A condition for triggering the PHR includes at least one of: a reporting prohibit timer expires and a pathloss changes by more than a threshold compared with the most recent PHR transmission; a reporting periodic timer expires; a PHR functionality is configured or reconfigured by an upper layer and does not indicate to disable a PHR function; or there is currently no pending PHR and a capacity of a current UL resource is less than an amount of data to be transmitted.

S303, the terminal device obtains a first UL resource.

The first UL resource is used for transmitting first UL data, where the first UL data is data transmitted by the terminal device to a network device during SDT. Transmission of the first UL data may be the 1^{st} data transmission in the current SDT, or may be data transmission (i. e. subsequent transmission) after the 1^{st} transmission in the SDT, and implementations of the disclosure are not limited in this regard.

There is no limitation on the type of the first UL resource in implementations of the disclosure. Exemplarily, the first UL resource includes at least one of: an UL grant scheduled via an RAR, a PUSCH resource used for transmitting a two-step random access payload, an UL resource configured by the network device through dynamic scheduling, or a semi-static resource pre-configured.

S304, the terminal device determines whether the first UL data contains the PHR.

If yes, perform step S305; and if not, perform step S307.

There is no limitation on how to determine whether the first UL data contains PHR in implementations of the disclosure. In some implementations, if a capacity of the first UL resource is greater than or equal to the amount of the data to be transmitted, the first UL data does not contain PHR. In other implementations, if the capacity of the first UL resource is less than the amount of the data to be transmitted and is greater than or equal to the sum of a PHR MAC CE and a subheader for the PHR MAC CE, the first UL data contains PHR.

S305, the terminal device cancels all pending PHRs.

S306, the terminal device establishes a MAC PDU through an existing LCP procedure, where the MAC PDU contains the data to be transmitted.

S307, the terminal device generates the PHR MAC CE, and establishes the MAC PDU through an existing LCP procedure.

The technical terms, technical effects, technical features, and optional implementations in S301-S307 can be understood with reference to S201-S203 illustrated in FIG. 3, and repeated contents will not be described again herein.

According to the communication method provided in implementations of the disclosure, the terminal device firstly triggers a PHR during SDT. Then, the terminal device determines, according to the amount of the data to be transmitted and the first UL resource, whether the first UL data contains the PHR, where the first UL resource is used for transmitting the first UL data. With of the method, the terminal device can determine, based on an UL resource and the data to be transmitted, whether the UL data contains a PHR, thereby avoiding more times of UL scheduling required to complete uploading of all the data to be transmitted due to occupancy of some of resources used for data transmission by a PHR MAC CE.

Those of ordinary skill in the art can understand that, all or some of the steps of the method implementations may be implemented by programs instructing related hardware. The programs may be stored in a computer-readable storage medium. When the programs are executed, the steps of the method implementations are performed. The storage medium may be any medium capable of storing program codes, such as a read-only memory (ROM), a random-access memory (RAM), a magnetic disk, or an optical disk.

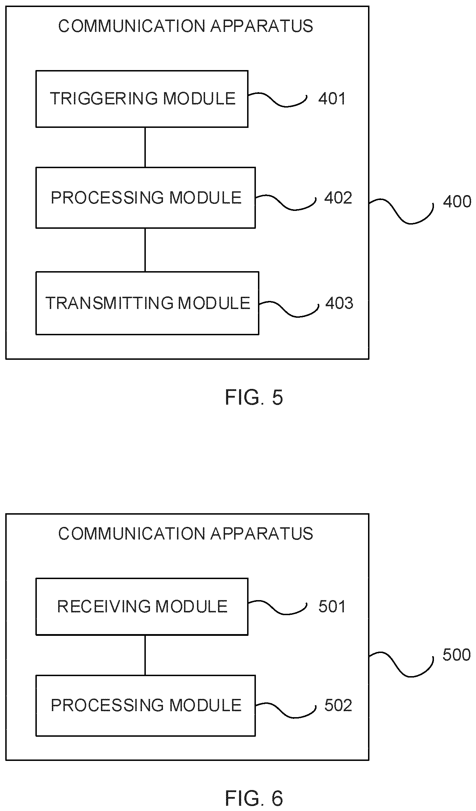

FIG. 5 is a schematic structural diagram of a communication apparatus provided in implementations of the disclosure. The apparatus may be implemented by software, hardware, or a combination thereof to execute the communication method at a terminal-device side in the foregoing implementations. As illustrated in FIG. 5, the apparatus 400 includes a triggering module 401 and a processing module 402. The triggering module 401 is configured to trigger a PHR during SDT. The processing module 402 is configured to determine, according to an amount of data to be transmitted and a first UL resource, whether first UL data contains the PHR, where the first UL resource is used for transmitting the first UL data.

In an optional implementation, if a capacity of the first UL resource is greater than or equal to the amount of the data to be transmitted, the first UL data does not contain the PHR.

In an optional implementation, the processing module 402 is further configured for the apparatus to cancel all pending PHRs.

In an optional implementation, if a capacity of the first UL resource is less than the amount of the data to be transmitted and the capacity of the first UL resource is greater than or equal to a sum of a MAC CE for the PHR (PHR MAC CE) and a subheader for the MAC CE, the first UL data contains the PHR.

In an optional implementation, the processing module 402 is further configured for the apparatus to generate and transmit the PHR MAC CE.

In an optional implementation, the PHR MAC CE is a single entry MAC CE, or a multiple entry MAC CE, or a MAC CE introduced for SDT.

In an optional implementation, the first UL data further includes a MAC PDU established based on SDT, and the MAC PDU contains the data to be transmitted.

In an optional implementation, SDT includes RA-SDT or CG-SDT.

In an optional implementation, a condition for triggering the PHR includes at least one of: a reporting prohibit timer expires and a pathloss changes by more than a threshold compared with the most recent PHR transmission; a reporting periodic timer expires; a PHR functionality is configured or reconfigured by an upper layer and does not indicate to disable a PHR function; or there is currently no pending PHR and a capacity of a current UL resource is less than the amount of the data to be transmitted.

In an optional implementation, the first UL resource includes at least one of: an UL grant scheduled via an RAR, a PUSCH resource used for transmitting a two-step random access payload, an UL resource configured by the network device through dynamic scheduling, or a semi-static resource pre-configured.

In an optional implementation, if the apparatus is configured with DC or CA, the apparatus is not restricted by or does not perform dynamic power sharing configuration when calculating the PHR.

In an optional implementation, the apparatus further includes a transmitting module 403. The transmitting module 403 is configured to transmit the first UL data on the first UL resource.

The communication apparatus provided in implementations of the disclosure can execute actions in the communication method at the terminal-device side in the foregoing implementations, and the implementation principles and technical effects thereof are similar and thus will not be described again herein.

FIG. 6 is a schematic structural diagram of another communication apparatus provided in implementations of the disclosure. The apparatus may be implemented by software, hardware, or a combination thereof to execute the communication method at a network-device side in the foregoing implementations. As illustrated in FIG. 6, the apparatus 500 includes a receiving module 501 and a processing module 502. The receiving module 501 is configured to receive first UL data transmitted on a first UL resource during SDT, where whether the first UL data contains a PHR is determined according to the first UL resource and an amount of data to be transmitted by a terminal device. The processing module 502 is configured to process the first UL data.

In an optional implementation, if a capacity of the first UL resource is greater than or equal to the amount of the data to be transmitted, the first UL data does not contain the PHR.

In an optional implementation, if a capacity of the first UL resource is less than the amount of the data to be transmitted and the capacity of the first UL resource is greater than or equal to a sum of a MAC CE for the PHR (PHR MAC CE) and a subheader for the MAC CE, the first UL data contains the PHR.

In an optional implementation, the PHR MAC CE is a single entry MAC CE, or a multiple entry MAC CE, or a MAC CE introduced for SDT.

In an optional implementation, the first UL data further includes a MAC PDU established based on SDT, and the MAC PDU contains the data to be transmitted.

In an optional implementation, SDT includes RA-SDT and CG-SDT.

In an optional implementation, a condition for triggering the PHR includes at least one of: a reporting prohibit timer expires and a pathloss changes by more than a threshold compared with the most recent PHR transmission; a reporting periodic timer expires; a PHR functionality is configured or reconfigured by an upper layer and does not indicate to disable a PHR function; or there is currently no pending PHR and a capacity of a current UL resource is less than the amount of the data to be transmitted.

In an optional implementation, the first UL resource includes at least one of: an UL grant scheduled via an RAR, a PUSCH resource used for transmitting a two-step random access payload, an UL resource configured by the apparatus through dynamic scheduling, or a semi-static resource pre-configured.

In an optional implementation, if the terminal device is configured with DC or CA, the terminal device is not restricted by or does not perform dynamic power sharing configuration when calculating the PHR.

The communication apparatus provided in implementations of the disclosure can execute actions in the communication method at the network-device side in the foregoing implementations, and the implementation principles and technical effects thereof are similar and thus will not be described again herein.

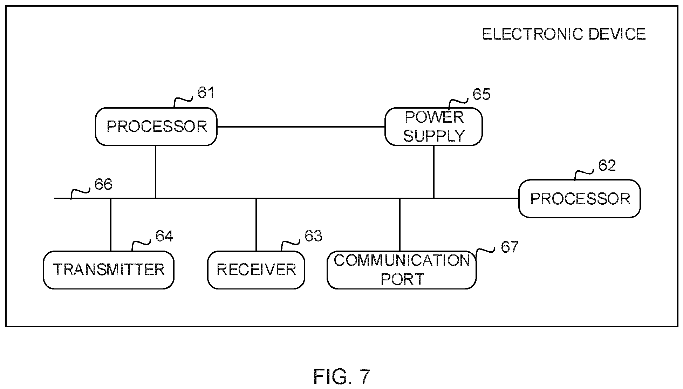

FIG. 7 is a schematic structural diagram of an electronic device provided in implementations of the disclosure. As illustrated in FIG. 7, the electronic device may include a processor 61 (for example, a central processing unit (CPU)), a memory 62, a receiver 63, and a transmitter 64. The receiver 63 and the transmitter 64 are coupled to the processor 61. The processor 61 controls a reception action of the receiver 63, and controls a transmission action of the transmitter 64. The memory 62 may include a high-speed RAM, and may further include a non-volatile memory (NVM), for example, at least one disk memory. The memory 62 can store various information for completing various processing functions and implementing steps of the method in implementations of the disclosure. Optionally, the electronic device in implementations of the disclosure may further include a power supply 65, a communication bus 66, and a communication port 66. The receiver 63 and the transmitter 64 may be integrated into a transceiver of the electronic device, or may be independent transceiver antennas of the electronic device. The communication bus 66 is configured for communication connection between components. The communication port 66 is configured for connection and communication between the electronic device and other peripheral devices.

In implementations of the disclosure, the memory 62 is configured to store computer-executable program codes, and the program codes includes information which, when executed by the processor 61, is operable with the processor 61 to execute a processing action at a terminal-device side in the foregoing method implementations, is operable with the transmitter 64 to execute a transmission action at the terminal-device side in the foregoing method implementations, and is operable with the receiver 63 to execute a reception action at the terminal-device side in the foregoing method implementations, and implementation principles and technical effects thereof are similar and thus will not be described again herein.

Alternatively, the information, when executed by the processor 61, is operable with the processor 61 to execute a processing action at a network-device side in the foregoing method implementations, is operable with the transmitter 64 to execute a transmission action at the network-device side in the foregoing method implementations, and is operable with the receiver 63 to execute a reception action at the network-device side in the foregoing method implementations, and implementation principles and technical effects thereof are similar and thus will not be described again herein.

Implementations of the disclosure further provide a communication system. The communication system includes a terminal device and a network device, so as to execute the foregoing communication method.

Implementation of the disclosure further provide a chip. The chip includes a processor and an interface. The interface is configured to input and output data or instructions processed by the processor. The processor is configured to execute the method provided in the foregoing method implementations. The chip may be applied to a terminal device or a network device.

The disclosure further provides a computer-readable storage medium. The computer-readable storage medium may include various mediums capable of storing program codes, such as a universal serial bus (USB) flash disk, a mobile hard disk, a ROM, a RAM, a magnetic disk, or an optical disk. Specifically, the computer-readable storage medium is configured to store program information, where the program information is used for implementing the foregoing communication method.

Implementations of the disclosure further provide a program which, when executed by a processor, is operable to implement the communication method provided in the above method implementations.

Implementations of the disclosure further provide a program product, for example, a computer-readable storage medium. The program product stores instructions which, when run on a computer, is operable with the computer execute the communication method provided in the foregoing method implementations.

All or some of the above implementations can be implemented through software, hardware, firmware, or any other combination thereof. When implemented by software, all or some the above implementations can be implemented in the form of a computer program product. The computer program product includes one or more computer instructions. When the computer instructions are applied and executed on a computer, all or some the operations or functions of the implementations of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

Finally, it should be noted that, the foregoing implementations are merely intended for describing the technical solutions of the disclosure, but are not intended to limit the disclosure. Although the disclosure is described in detail with reference to the foregoing implementations, those of ordinary skill in the art should understand that modifications can still be made to the technical solutions described in the foregoing implementations, or equivalent replacements can be made to some or all technical features. However, these modifications or replacements do not make the essence of the corresponding technical solutions depart from the scope of the technical solutions of the implementations of the disclosure.

## Claims

1. A communication method, comprising:
triggering, by a terminal device, a power headroom reporting (PHR) during small data transmission (SDT); and
determining according to an amount of data to be transmitted and a first uplink (UL) resource, by the terminal device, whether first UL data contains the PHR, wherein the first UL resource is used for transmitting the first UL data.

2. The method of claim 1, wherein when a capacity of the first UL resource is greater than or equal to the amount of the data to be transmitted, the first UL data does not contain the PHR.

3. The method of claim 2, further comprising:
canceling, by the terminal device, all pending PHRs.

4. The method of claim 1, wherein when a capacity of the first UL resource is less than the amount of the data to be transmitted and the capacity of the first UL resource is greater than or equal to a sum of a media access control-control element (MAC CE) for the PHR (PHR MAC CE) and a subheader for the MAC CE, the first UL data contains the PHR.

5. The method of claim 4, further comprising:
generating and transmitting, by the terminal device, the PHR MAC CE.

6. The method of claim 4 or 5, wherein the PHR MAC CE is a single entry MAC CE, or a multiple entry MAC CE, or a MAC CE introduced for SDT.

7. The method of any of claims 1 to 6, wherein the first UL data further comprises a MAC packet data unit (PDU) established based on SDT, and the MAC PDU contains the data to be transmitted.

8. The method of any of claims 1 to 7, wherein SDT comprises random access (RA)-SDT or configured grant (CG)-SDT.

9. The method of any of claims 1 to 7, wherein a condition for triggering the PHR comprises at least one of: a reporting prohibit timer expires and a pathloss changes by more than a threshold compared with the most recent PHR transmission; a reporting periodic timer expires; a PHR functionality is configured or reconfigured by an upper layer and does not indicate to disable a PHR function; or there is currently no pending PHR and a capacity of a current UL resource is less than the amount of the data to be transmitted.

10. The method of any of claims 1 to 7, wherein the first UL resource comprises at least one of: an UL grant scheduled via a random access response (RAR), a physical uplink shared channel (PUSCH) resource for transmitting a two-step random access payload, an UL resource configured by a network device through dynamic scheduling, or a semi-static resource pre-configured.

11. The method of any of claims 1 to 7, wherein on condition that the terminal device is configured with dual connectivity (DC) or carrier aggregation (CA), the terminal device is not restricted by or does not perform dynamic power sharing configuration when calculating the PHR.

12. The method of any of claims 1 to 7, further comprising:
transmitting, by the terminal device, the first UL data on the first UL resource.

13. A communication method, comprising:
receiving, by a network device, first uplink (UL) data transmitted on a first UL resource during small data transmission (SDT), wherein whether the first UL data contains a power headroom reporting (PHR) is determined according to the first UL resource and an amount of data to be transmitted by a terminal device.

14. The method of claim 13, wherein when a capacity of the first UL resource is greater than or equal to the amount of the data to be transmitted, the first UL data does not contain the PHR.

15. The method of claim 13, wherein when a capacity of the first UL resource is less than the amount of the data to be transmitted and the capacity of the first UL resource is greater than or equal to a sum of a media access control-control element (MAC CE) for the PHR (PHR MAC CE) and a subheader for the MAC CE, the first UL data contains the PHR.

16. The method of claim 15, wherein the PHR MAC CE is a single entry MAC CE, or a multiple entry MAC CE, or a MAC CE introduced for SDT.

17. The method of any of claims 13 to 16, wherein the first UL data further comprises a MAC packet data unit (PDU) established based on SDT, and the MAC PDU contains the data to be transmitted.

18. The method of any of claims 13 to 17, wherein SDT comprises random access (RA)-SDT or configured grant (CG)-SDT.

19. The method of any of claims 13 to 17, wherein a condition for triggering the PHR comprises at least one of: a reporting prohibit timer expires and a pathloss changes by more than a threshold compared with the most recent PHR transmission; a reporting periodic timer expires; a PHR functionality is configured or reconfigured by an upper layer and does not indicate to disable a PHR function; or there is currently no pending PHR and a capacity of a current UL resource is less than the amount of the data to be transmitted.

20. The method of any of claims 13 to 17, wherein the first UL resource comprises at least one of: an UL grant scheduled via a random access response (RAR), a physical uplink shared channel (PUSCH) resource for transmitting a two-step random access payload, an UL resource configured by the network device through dynamic scheduling, or a semi-static resource pre-configured.

21. The method of any of claims 13 to 17, wherein on condition that the terminal device is configured with dual connectivity (DC) or carrier aggregation (CA), the terminal device is not restricted by or does not perform dynamic power sharing configuration when calculating the PHR.

22. A communication apparatus, comprising:
a triggering module configured to trigger a power headroom reporting (PHR) during small data transmission (SDT); and
a processing module configured to determine, according to an amount of data to be transmitted and a first uplink (UL) resource, whether first UL data contains the PHR, wherein the first UL resource is used for transmitting the first UL data.

23. The apparatus of claim 22, when a capacity of the first UL resource is greater than or equal to the amount of the data to be transmitted, the first UL data does not contain the PHR.

24. The apparatus of claim 23, wherein the processing module is further configured for the apparatus to cancel all pending PHRs.

25. The apparatus of claim 22, when a capacity of the first UL resource is less than the amount of the data to be transmitted and the capacity of the first UL resource is greater than or equal to a sum of a media access control-control element (MAC CE) for the PHR (PHR MAC CE) and a subheader for the MAC CE, the first UL data contains the PHR.

26. The apparatus of claim 25, wherein the processing module is further configured for the apparatus to generate and transmit the PHR MAC CE.

27. The apparatus of claim 25 or 26, wherein the PHR MAC CE is a single entry MAC CE, or a multiple entry MAC CE, or a MAC CE introduced for SDT.

28. The apparatus of any of claims 22 to 27, wherein the first UL data further comprises a MAC packet data unit (PDU) established based on SDT, and the MAC PDU contains the data to be transmitted.

29. The apparatus of any of claims 22 to 28, wherein SDT comprises random access (RA)-SDT or configured grant (CG)-SDT.

30. The apparatus of any of claims 22 to 28, wherein a condition for triggering the PHR comprises at least one of: a reporting prohibit timer expires and a pathloss changes by more than a threshold compared with the most recent PHR transmission; a reporting periodic timer expires; a PHR functionality is configured or reconfigured by an upper layer and does not indicate to disable a PHR function; or there is currently no pending PHR and a capacity of a current UL resource is less than the amount of the data to be transmitted.

31. The apparatus of any of claims 22 to 28, wherein the first UL resource comprises at least one of: an UL grant scheduled via a random access response (RAR), a physical uplink shared channel (PUSCH) resource for transmitting a two-step random access payload, an UL resource configured by a network device through dynamic scheduling, or a semi-static resource pre-configured.

32. The apparatus of any of claims 22 to 28, wherein when the apparatus is configured with dual connectivity (DC) or carrier aggregation (CA), the apparatus is not restricted by or does not perform dynamic power sharing configuration when calculating the PHR.

33. The apparatus of any of claims 22 to 28, wherein the apparatus further comprises:
a transmitting module configured to transmit the first UL data on the first UL resource.

34. A communication apparatus, comprising:
a receiving module configured to receive first uplink (UL) data transmitted on a first UL resource during small data transmission (SDT), wherein whether the first UL data contains a power headroom reporting (PHR) is determined according to the first UL resource and an amount of data to be transmitted by a terminal device; and
a processing module configured to process the first UL data.

35. The apparatus of claim 34, wherein when a capacity of the first UL resource is greater than or equal to the amount of the data to be transmitted, the first UL data does not contain the PHR.

36. The apparatus of claim 34, wherein when a capacity of the first UL resource is less than the amount of the data to be transmitted and the capacity of the first UL resource is greater than or equal to a sum of a media access control-control element (MAC CE) for the PHR (PHR MAC CE) and a subheader for the MAC CE, the first UL data contains the PHR.

37. The apparatus of claim 36, wherein the PHR MAC CE is a single entry MAC CE, or a multiple entry MAC CE, or a MAC CE introduced for SDT.

38. The apparatus of any of claims 34 to 37, wherein the first UL data further comprises a MAC packet data unit (PDU) established based on SDT, and the MAC PDU contains the data to be transmitted.

39. The apparatus of any of claims 34 to 38, wherein SDT comprises random access (RA)-SDT or configured grant (CG)-SDT.

40. The apparatus of any of claims 34 to 38, wherein a condition for triggering the PHR comprises at least one of: a reporting prohibit timer expires and a pathloss changes by more than a threshold compared with the most recent PHR transmission; a reporting periodic timer expires; a PHR functionality is configured or reconfigured by an upper layer and does not indicate to disable a PHR function; or there is currently no pending PHR and a capacity of a current UL resource is less than the amount of the data to be transmitted.

41. The apparatus of any of claims 34 to 38, wherein the first UL resource comprises at least one of: an UL grant scheduled via a random access response (RAR), a physical uplink shared channel (PUSCH) resource for transmitting a two-step random access payload, an UL resource configured by the apparatus through dynamic scheduling, or a semi-static resource pre-configured.

42. The apparatus of any of claims 34 to 38, wherein on condition that the terminal device is configured with dual connectivity (DC) or carrier aggregation (CA), the terminal device is not restricted by or does not perform dynamic power sharing configuration when calculating the PHR.

43. A terminal device, comprising:
a receiver;
an interface configured to communicate with a network device;
a memory configured to store computer-executable instructions; and
a processor configured to execute the computer-executable instructions stored in the memory, to implement the method of any of claims 1 to 12.

44. A network device, comprising:
a transmitter;
an interface configured to communicate with a terminal device;
a memory configured to store computer-executable instructions; and
a processor configured to execute the computer-executable instructions stored in the memory, to implement the method of any of claims 13 to 21.

45. A computer program product comprising computer instructions which, when executed by a processor, are operable to implement the method of any of claims 1 to 21.

46. A computer-readable storage medium configured to store computer-executable instructions which, when executed by a processor, are operable to implement the method of any of claims 1 to 21.
